# EUROPEAN PATENT APPLICATION

(11) **EP 2 685 223 A1**
(43) Date of publication of application: **15.01.2014**
(21) Application number: 13171775.3
(22) Date of filing: 13.06.2013
(51) Int. Cl.: G01F 1/684, G01F 15/00, G01F 15/18

(54) **Flow Sensor**

(30) Priority: 09.07.2012 JP 2012153606
(71) Applicant: Azbil Corporation, Chiyoda-ku Tokyo 100-6419 (JP)
(72) Inventor: Ike, Shinichi, TOKYO 100-6419 (JP); Nakano, Seishi, TOKYO 100-6419 (JP)
(74) Representative: Tischner, Oliver

(57) **Abstract**

Provided is a flow sensor including: a base made of glass; a substrate made of glass and disposed on an upper surface of the base; a flow velocity detection unit including an electrical resistance element, the flow velocity detection unit being disposed on an upper surface of the substrate; and an electrode that penetrates the substrate and is electrically connected to the electrical resistance element.

## Description

### Background

The present invention relates to a measurement technology, and particularly, relates to a flow sensor.

In an industrial furnace, a boiler, an air-conditioning heat source apparatus, or the like, it is demanded to supply a fluid such as a gas and a liquid at an appropriate flow rate. Therefore, various flow sensors for accurately measuring a flow rate have been developed. A flow sensor is used to measure a flow rate of a corrosive gas such as a sulfur oxide (SO_{X}), a nitrogen oxide (NO_{X}), a chlorine molecule (Cl₂), and a boron trichloride (BCl₃) in some cases. In view of this, such a technique that a substrate of a chip of a flow sensor is made of glass having corrosive resistance, and an electrode for taking out an electrical signal from the chip is provided on a back surface of the substrate has been proposed (see, for example, Japanese Patent Application Laid-open No. 2011-185869).

### Summary

It is demanded to further improve the corrosive resistance of the flow sensor. In view of this, it is an object of the present invention to provide a flow sensor having corrosive resistance.

According to an embodiment of the present invention, there is provided a flow sensor including: (a) a base made of glass; (b) a substrate made of glass and disposed on an upper surface of the base; (c) a flow velocity detection unit including an electrical resistance element, the flow velocity detection unit being disposed on an upper surface of the substrate; and (d) an electrode that penetrates the substrate and is electrically connected to the electrical resistance element.

According to the present invention, it is possible to provide the flow sensor having the corrosive resistance. Further advantages, features, aspects and details are evident from the dependent claims, the description and the drawings.

### Brief Description of Drawings

Some of the above mentioned aspects will be described in more detail in the following description of typical embodiments with reference to the following drawings in which:
Fig. 1 is a perspective view showing a flow sensor according to an embodiment of the present invention; and
Fig. 2 is a cross-sectional view showing the flow sensor taken along the line II-II of Fig. 1 according to the embodiment of the present invention.

### Detailed Description of Embodiments

Hereinafter, an embodiment of the present invention will be described with reference to the drawings. In the drawings, the same or similar parts are denoted by the same or similar reference symbols. Note that the drawings are schematic drawings. Specific dimensions and the like are to be determined with reference to the following description. As a matter of course, dimensional relation between one figure and another figure may be different, and a dimensional ratio between one figure and another figure may be different.

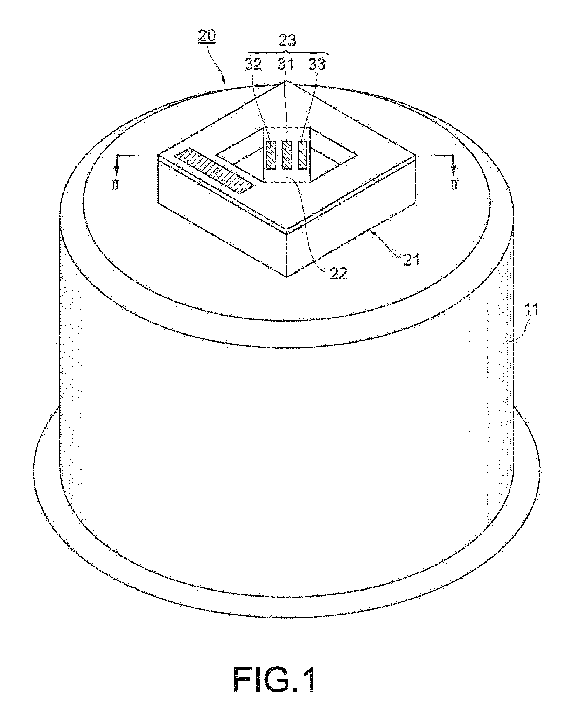

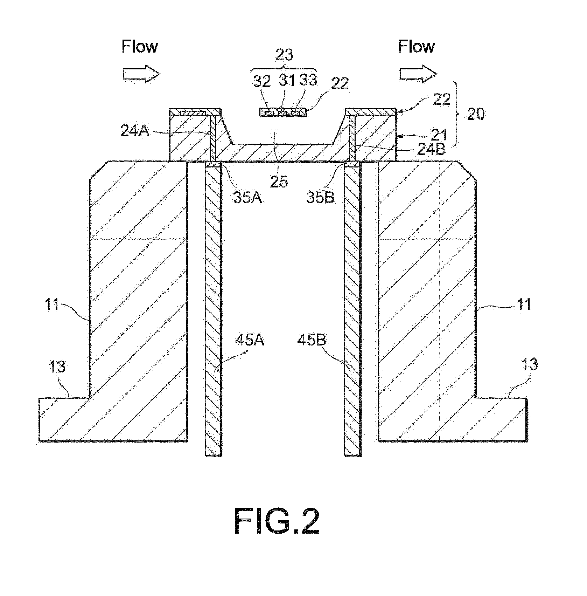

A flow sensor according to the embodiment includes a base 11 made of glass and a chip 20 disposed on the base 11 as shown in Fig. 1, which is a perspective view, and Fig. 2, which is a cross-sectional view of Fig. 1 taken along the line II-II. The chip 20 includes a substrate 21 made of glass and disposed on an upper surface of the base 11, a flow velocity detection unit 22 which includes an electrical resistance element 23 and is disposed on an upper surface of the substrate 21, and electrodes 24A and 24B which penetrate the substrate 21 and are electrically connected to the electrical resistance element 23.

On the substrate 21, a cavity 25 is formed. The cavity 25 is formed by an etching method, a sandblasting method, or the like. The substrate 21 can be made of quartz glass or borosilicate glass such as Tempax (registered trademark), for example. In the flow velocity detection unit 22, the electrical resistance element 23 is included in an insulating film or the like. The insulating film can be made of a silicon oxide (SiO₂) or the like. The flow velocity detection unit 22 is disposed so as to cover the cavity 25 of the substrate 21. Further, on both ends of the flow velocity detection unit 22, openings of the cavity 25 are formed.

In the flow velocity detection unit 22, the electrical resistance element 23 provided inside the insulating film having corrosive resistance includes a first temperature detection element 32, a heat generation element 31, and a second temperature detection element 33. The heat generation element 31 generates heat by supplying electric power thereto and heats a fluid that flows on the surface of the flow velocity detection unit 22. The first temperature detection element 32 and the second temperature detection element 33 each output an electrical signal depending on the temperature of the fluid that flows on the surface of the flow velocity detection unit 22. The first temperature detection element 32 is used to detect the temperature of the fluid on an upstream side of the heat generation element 31, for example, and the second temperature detection element 33 is used to detect the temperature of the fluid on a downstream side of the heat generation element 31, for example. The heat generation element 31, the first temperature detection element 32, and the second temperature detection element 33 each can be made of a conductive material such as platinum (Pt).

The electrodes 24A and 24B shown in Fig. 2 are electrically connected to at least one of the first temperature detection element 32, the heat generation element 31, and the second temperature detection element 33 via a circuit provided in the flow velocity detection unit 22. It should be noted that the number of electrodes that penetrate the substrate 21 is not limited to two, although the two electrodes 24A and 24B that penetrate the substrate 21 are shown in Fig. 2. On a back surface of the substrate 21, a conducting pad 35A electrically connected to the electrode 24A and a conducting pad 35B electrically connected to the electrode 24B are disposed. The electrodes 24A and 24B can be made of copper (Cu), a copper alloy, or the like. The electrodes 24A and 24B each can be formed by forming a hole in the substrate 21 by the etching method or a microfabrication method with the use of a drill and filling the hole with conducting matters. The conducting pads 35A and 35B can be made of gold (Au) or the like.

The tubular base 11 has an outward flange portion 13 on a lower end thereof. The base 11 can be made of quartz glass or borosilicate glass such as Tempax (registered trademark). The chip 20 is disposed on the upper surface of the base 11. The base 11 and the substrate 21 of the chip 20 are made of glass, so it is possible to bond the upper surface of the base 11 and the back surface of the substrate 21 to each other with a corrosive-resistant adhesive. As the adhesive, a fluororesin-based adhesive can be used. Alternatively, the upper surface of the base 11 and the back surface of the substrate 21 may be bonded to each other by a dilute hydrofluoric acid (HF) bonding method, a room temperature activation bonding method, or a diffusion bonding method.

If the base 11 and the substrate 21 are made of the same glass, a coefficient of thermal expansion of the base 11 is the same as a coefficient of thermal expansion of the substrate 21. Therefore, distortion which can be generated on an interface between materials having different coefficients of thermal expansion is difficult to be generated in the flow sensor according to the embodiment.

Inside the tubular base 11, conducting members 45A and 45B for taking electrical signals to the outside from the electrodes 24A and 24B on the back surface of the chip 20 are disposed. The electrodes 24A and 24B are electrically connected to the conducting members 45A and 45B, respectively. Lead pins or the like can be used as the conducting members 45A and 45B.

The flow sensor according to the embodiment is disposed in a flow channel to which the fluid is supplied. Here, in the case where the fluid in contact with the surface of the flow velocity detection unit 22 remains still, the heat applied to the fluid by the heat generation element 31 is transmitted in the upstream direction and the downstream direction of the flow channel symmetrically. Thus, the temperature of the first temperature detection element 32 is the same as the temperature of the second temperature detection element 33, and the electric resistance of the first temperature detection element 32 is the same as the electric resistance of the second temperature detection element 33. In contrast, in the case where the fluid flows from the side on which the first temperature detection element 32 is disposed toward the side on which the second temperature detection element 33 is disposed, the heat applied to the fluid by the heat generation element 31 is transmitted to the side on which the second temperature detection element 33 is disposed. Therefore, the temperature of the second temperature detection element 33 is higher than the temperature of the first temperature detection element 32. As a result, a difference is caused between the electric resistance of the first temperature detection element 32 and the electric resistance of the second temperature detection element 33. The difference between the electric resistance of the second temperature detection element 33 and the electric resistance of the first temperature detection element 32 are correlated with the flow velocity of the fluid in contact with the surface of the flow velocity detection unit 22. Therefore, from the difference between the electric resistance of the second temperature detection element 33 and the electric resistance of the first temperature detection element 32, the flow rate of the fluid in contact with the surface of the flow velocity detection unit 22 is obtained.

In a flow sensor in related art, a base is made of corrosive-resistant metal such as Hastelloy (registered trademark) and Inconel (registered trademark). However, the corrosive-resistant metal does not have resistance to a corrosive liquid such as highly concentrated hydrochloric acid, sulfuric acid, aqua regia, and ferric chloride. Further, if the corrosive-resistant metal is used as the material of the base, it is impossible to perform anodic bonding between the base and a substrate of a chip which is made of quartz glass.

In contrast, in the flow sensor according to the embodiment, not only the substrate 21 of the chip 20 but the base 11 is made of glass, so it is possible to measure the flow rate of the corrosive liquid such as highly concentrated hydrochloric acid, sulfuric acid, aqua regia, and ferric chloride. Thus, it is possible to apply the flow sensor according to the embodiment to a physical and chemical field, a medical field, a biotechnological field, a semiconductor field, and the like for treating the corrosive liquid.

### (Other embodiments)

The embodiment of the present invention is described above. It should be understood that descriptions and drawings, which are part of the disclosure, do not limit the present invention. It should be understood by those skilled in the art that various modifications, embodiments, and operational technologies become apparent based on the disclosure. For example, the flow sensor according to the embodiment has the corrosive resistance but may of course be used to measure the flow rate of a fluid having no corrosiveness. In this way, it should be understood that the present invention comprises various embodiments and the like which are not described here.

## Claims

1. A flow sensor, comprising:
a base (11) made of glass;
a substrate (21) made of glass and disposed on an upper surface of the base;
a flow velocity detection unit (22) including an electrical resistance element, the flow velocity detection unit being disposed on an upper surface of the substrate; and
an electrode (24A, 24B) that penetrates the substrate and is electrically connected to the electrical resistance element.

2. The flow sensor according to claim 1, further comprising
a conducting member (45A, 45B) disposed inside the base (11) and electrically connected to the electrode.

3. The flow sensor according to claim 1 or 2, wherein
the upper surface of the base (11) and a back surface of the substrate are bonded to each other with an adhesive.

4. The flow sensor according to claim 3, wherein
the adhesive is a fluororesin-based adhesive.

5. The flow sensor according to claim 1 or 2, wherein
the upper surface of the base and a back surface of the substrate are bonded to each other by one of dilute hydrofluoric acid bonding, room temperature activation bonding, and diffusion bonding.

6. The flow sensor according to any one of claims 1 to 5, wherein
the base (11) and the substrate (21) have the same coefficient of thermal expansion.

7. The flow sensor according to any one of claims 1 to 6, wherein
the base (11) is made of one of quartz glass and borosilicate glass.

8. The flow sensor according to any one of claims 1 to 7, wherein
the substrate (21) is made of one of quartz glass and borosilicate glass.

9. The flow sensor according to any one of claims 1 to 8, wherein
the base (11) has a tubular shape.
